(19) **Europäisches Patentamt**
**European Patent Office**
**Office européen des brevets**

(11) **EP 1 672 240 B1**

(12) **EUROPEAN PATENT SPECIFICATION**

(45) Date of publication and mention
of the grant of the patent:
**20.02.2008 Bulletin 2008/08**

(51) Int Cl.:
*F16F 1/06* *(2006.01)*        *F16F 1/12* *(2006.01)*
*B60G 11/15* *(2006.01)*

(21) Application number: **05027640.1**

(22) Date of filing: **16.12.2005**

(54) **Spring for suspension unit**

Feder für eine Aufhängung

Ressort pour une suspension

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.12.2004 JP 2004364417**
**01.04.2005 JP 2005106919**

(43) Date of publication of application:
**21.06.2006 Bulletin 2006/25**

(73) Proprietor: **Yamaha Hatsudoki Kabushiki Kaisha Iwata-shi, Shizuoka-ken (JP)**

(72) Inventors:
• **Oohashi, Satoshi**
**Iwata-shi**
**Shizuoka-ken (JP)**

• **Miyashiro, Shidehiko**
**Iwata-shi**
**Shizuoka-ken (JP)**

(74) Representative: **Grünecker, Kinkeldey, Stockmair & Schwanhäusser Anwaltssozietät Maximilianstrasse 58 80538 München (DE)**

(56) References cited:
**DE-C1- 10 125 503        US-A- 4 903 985**
**US-A1- 2002 105 127**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a suspension unit according to the preamble part of independent claim 1 and a vehicle comprising same. In particular, the present invention relates to a spring capable of reducing buckling (trunk bending relative to a center line of a spring) at the time of contraction, a suspension unit provided with the spring, and a vehicle, such as motorcycles, provided with the suspension unit.

In recent years, motorcycles used for specific applications such as race or the like adopt springs, which are made of Ti to be lightweight as compared with conventional springs made of Fe, for suspension units or the like. For example, in case of adopting a Ti spring for a suspension unit, a weight can be reduced by 200 to 500 g (by spring constant) in comparison with conventional springs made of Fe (US 2002/0105127 A1).

However, in the case where a spring made of a material having a high material strength is to be replaced by a spring made of a material having a low material strength, for example, in the case where a spring made of Fe and mounted in existing suspension units is to be replaced by that spring made of Ti and having the same spring constant as that of the spring made of Fe, wire diameter must be increased in order to ensure the strength for the spring made of Ti.

Therefore, a clearance between a cylinder, which forms a shock absorber of a suspension unit, and a spring made of Ti and thus replaced is decreased, so that there is a fear that the spring made of Ti undergoes buckling at the time of contraction to contact with the cylinder.

Hereupon, US 2002/0105127 A1 discloses a suspension unit according to the preamble part of claim 1. It is proposed a spring formed so as to bend a central axis thereof and having respective first turns on both ends thereof inclined relative to spring bearing members, respectively, at a predetermined angle. However, the structure with a central axis of the spring bent involves a fear that a state equivalent to buckling is brought about at the time of contraction of the spring, and the spring comes into contact with a cylinder, which forms the shock absorber, when used for the suspension unit.

The invention has been thought of in view of the above described situation and has its objective to provide a suspension unit capable of reducing buckling at the time of contraction while being simple in structure, and a vehicle.

This objective is solved in an inventive manner by a suspension unit having the combination of features of independent claim 1.

Preferably, said regions of respective first turns at both end sides of the spring are formed about $\pm 45°$ relative to points of maximum bending in the contracted state.

Further, preferably the number of total turns of the spring is represented by the following formula (1) or (2)

$$N = n + 0.75 \ldots (1)$$

$$N = n - 0.25 \ldots (2)$$

where N: number of total turns of a spring and n: integral.

Still further, preferably the number of total turns of the spring (1) is represented by the following formula (3) or (4)

$$N = (n + 0.75) \pm 0.125 \ldots (3)$$

$$N = (n - 0.25) \pm 0.125 \ldots (4)$$

where N: number of total turns of a spring and n: integral.

Beneficially, a spring spacer is mounted to the spring, the spring spacer comprising a contact preventive portion configured to prevent the terminal end of the first turn from contacting with the second turn.

Further, beneficially the spring is made of a material having a lower material strength than Fe, preferably made of Ti.

Still further, beneficially at least one spring bearing member contacts with one end or both ends of the spring, the spring bearing member being made of Fe and/or Al.

Preferably, a spacer made of a resin is interposed between the spring and the spring bearing member.

The afore-mentioned objective is further solved in an inventive manner by a vehicle, in particular a motorcycle, comprising a suspension unit according to at least one of the above embodiments.

In the following, the present invention is explained in greater detail with respect to several embodiments thereof in conjunction with the accompanying drawings, wherein:

Fig. 1      is a side view showing a part of a vehicle (off-road type motorcycle) according to an embodiment;

Fig. 2      is a partially, cross sectional view showing a suspension unit according to the embodiment;

Fig. 3      is a partially, cross sectional view showing another suspension unit according to an embodiment;

Fig. 4      is a perspective view illustrating buckling of a spring;

Fig. 5      is a bar graph illustrating the relationship between a number of total turns of a spring calculated from simulation data and a buckling value;

Fig. 6      is a bar graph illustrating the relationship between a number of total turns of a spring of a prototype and a buckling value;

Fig. 7      is a curve graph illustrating amounts of buckling at respective points of several kinds of springs, which are different from one another in number of total turns;

Fig. 8      shows plan views of both ends of a spring to illustrate the relationship between a number of total turns of a spring and buckling;

Fig. 9      is a perspective view showing a spring spacer mounted to the spring according to an embodiment;

Fig. 10      is a perspective view showing a state, in which the spring spacer is mounted to the spring according to the embodiment; and

Fig. 11      is a perspective view showing a state, in which the spring spacer and a spring bearing member are mounted to the spring according to an embodiment.

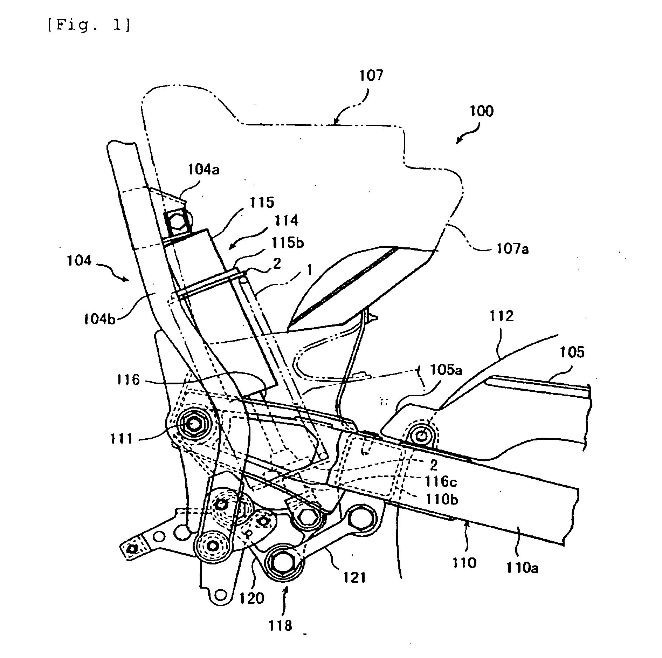

A suspension unit, a spring, and a vehicle according to an embodiment will be described below with reference to the drawings. First, an embodiment of a suspension unit and a vehicle, which are provided with the present spring will be described with reference to Figs. 1 to 3.

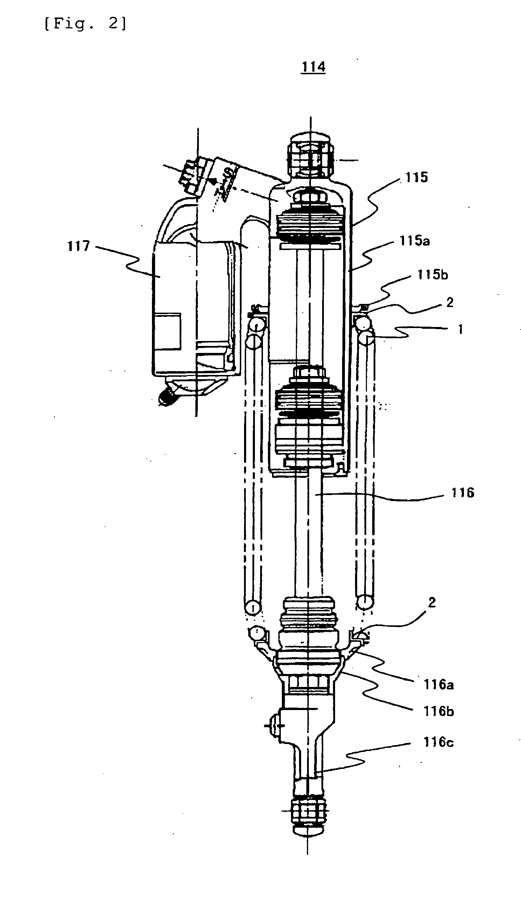

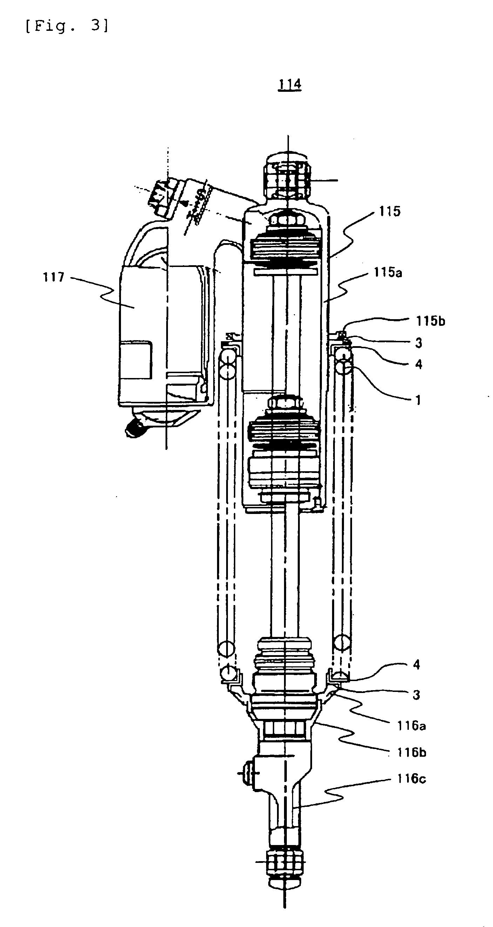

Fig. 1 is a side view showing a part of a vehicle (off-road type motorcycle) according to the embodiment. Also, Figs. 2 and 3 are partial, cross sectional views showing a suspension unit according to the embodiment.

In Fig. 1, the reference numeral 100 denotes a rear arm support of an off-road type motorcycle, a rear arm bracket 104b is arranged obliquely of a vehicle and downwardly of a vehicle frame 104 to diverge and extend vertically, and an air cleaner 107 is arranged in a space surrounded by a seat, left and right seat rails, and left and right seat stays, which are not shown. The air cleaner 107 is constructed such that an element for filtration of an air is arranged in an air cleaner casing 107a.

A rear arm 110 is pivotally supported by a pivot shaft 111 on a rear and lower end of the rear arm bracket 104b to freely swing up and down, and a rear wheel 112 is journaled on a rear end of the rear arm 110. The rear arm 110 is structured to connect a square-shaped cross pipe 110b between front ends of left and right arm portions 110a, 110a. The cross pipe 110b is arranged in a position as close to the rear wheel 112 as possible so as to make a clearance between it and a front edge of the rear wheel minimum whereby a wheel base is shortened and strength and rigidity required for the whole rear arm 110 are ensured. In addition, the left and right arm portions 110a, 110a and the cross pipe 110b may be structured integral by means of casting.

Also, a chain casing 105 that covers an upper portion of a drive chain is arranged on the left arm portion 110a. A front edge 105a of the chain casing 105 is positioned on an upper surface of the cross pipe 110b. In addition, the chain casing 105 may be omitted from the construction.

A single inverted type suspension unit 114 is arranged between the vehicle frame 104 and the rear arm 110 and on a center line of a vehicle. The suspension unit 114 mainly includes, as shown in Fig. 2, a cylinder 115, a piston rod 116, a reservoir tank 117, a Ti spring (spring) 1, and a linkage 118 (see Fig. 1).

The cylinder 115 is connected to a bracket 104a on a rear and upper end of the rear arm bracket 104b as shown in Fig. 1. Also, as shown in Fig. 2, the cylinder 115 is provided on an outer peripheral surface toward an upper end thereof with a male thread 115a, and a lock nut 115b and a spring bearing member 2, respectively, are threaded on the male thread 115a.

The piston rod 116 is connected to a piston (not shown) slidably inserted into the cylinder 115 and projects downward from the cylinder 115. Mounted to a lower end of the piston rod 116 are a metallic spring bearing member 2 that pairs with the spring bearing member 2, load bearing members 116a, 116b that support the spring bearing member 2, and a link portion 116c.

The reservoir tank 117 is communicated to an interior of the cylinder 115 via a pressure oil flow passage (not shown) to accommodate an increase and a decrease in pressure oil volume in the cylinder 115 when the piston rod 116 extends and contracts.

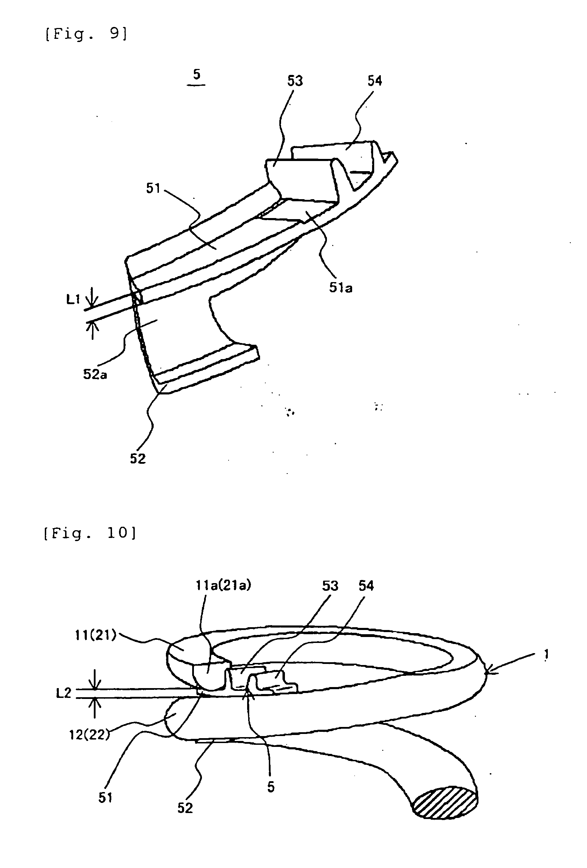

The Ti spring 1 is exteriorly mounted to the cylinder 115 and the piston rod 116 and held by the pair of the upper and lower bearing members 2, 2. The bias of the Ti spring 1 can be regulated by varying a position, in which the lock nut 115b and the spring bearing member 2 are clamped together. Mounted to the Ti spring 1 is a spring spacer 5 (see Figs. 9 to 11), according to the embodiment, described later.

The linkage 118 includes, as shown in Fig. 1, a first link 120 pivotally mounted to a lower end of the rear arm bracket 104b and a second link 121 pivotally mounted to a lower surface of the cross pipe 110b. The piston rod 116 is connected to the rear arm 110 by connecting the link portion 116c of the piston rod 116 to the first link 120 of the linkage 118.

Here, the spring bearing member 2 described above includes a metallic member having a flange portion 2b, which bears a load of the Ti spring 1, made integral with a cylindrical-shaped trunk portion 2a (see Fig. 1 for the trunk portion 2a and the flange portion 2b). One of the spring bearing members 2 is provided on an inside of the trunk portion 2a with a female thread (not shown), which is threaded on the male thread 115a of the cylinder 115.

The spring bearing members 2 support both ends of the Ti spring 1 to bear a load thereof (for example, a load of 7500 N at the time of off-road traveling) as shown in Fig. 2. In addition, that surface of the flange portion 2b, which abuts against the Ti spring 1, corresponds to "spring bearing surface" that bears a load of the Ti spring 1.

According to the embodiment, the respective spring bearing members 2 in contact with both ends of the Ti spring 1 are made of Fe to thereby prevent electrolytic corrosion caused by contact between different metals. That is, Fe is small in electric potential difference relative to Ti as compared with other metals, and in the case where the respective spring bearing members 2 are made of Fe, it is possible to prevent electrolytic corrosion of the spring bearing members 2 while ensuring durability for a load of the Ti spring 1.

Also, as shown in Fig. 3, respective spring bearing members 3 may be made of Al and spacers 4 made of a resin may be interposed between both ends of the Ti spring 1 and the respective spring bearing members 3. With such construction, electrolytic corrosion of the Ti spring 1 and the spring bearing members 3 made of Al can be prevented and lightening of a suspension unit can be achieved by forming the respective spring bearing members 3 from Al.

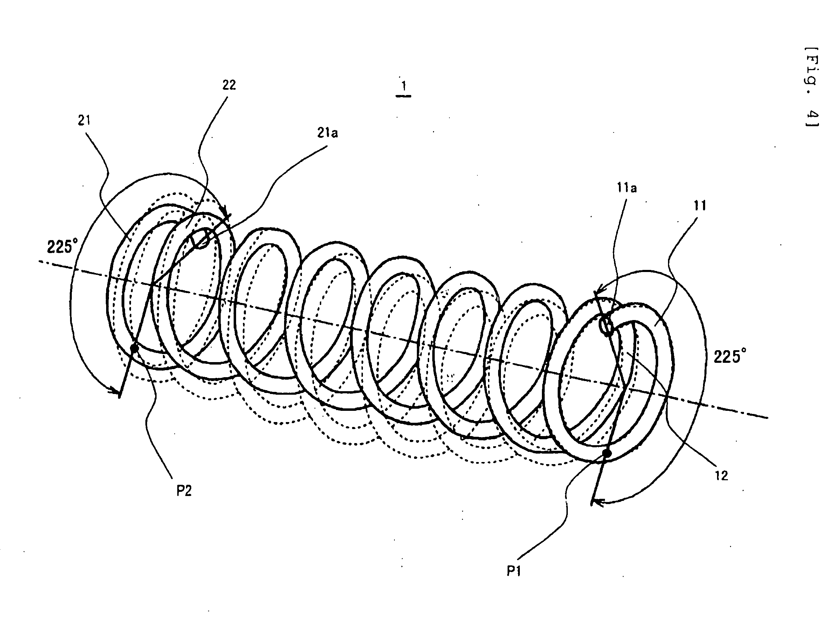

Subsequently, the Ti spring 1 according to the embodiment will be described with reference to Figs. 4 to 8. In addition, for the sake of convenience of explanation, the Ti spring 1 according to the embodiment is referred simply below to as "spring 1". Also, while Figs. 4 to 8 show not only a spring having constituent features according to the teaching of the present application but also a spring (comparative example) having no constituent features as a comparative example, both springs are referred as "spring 1" in explanation.

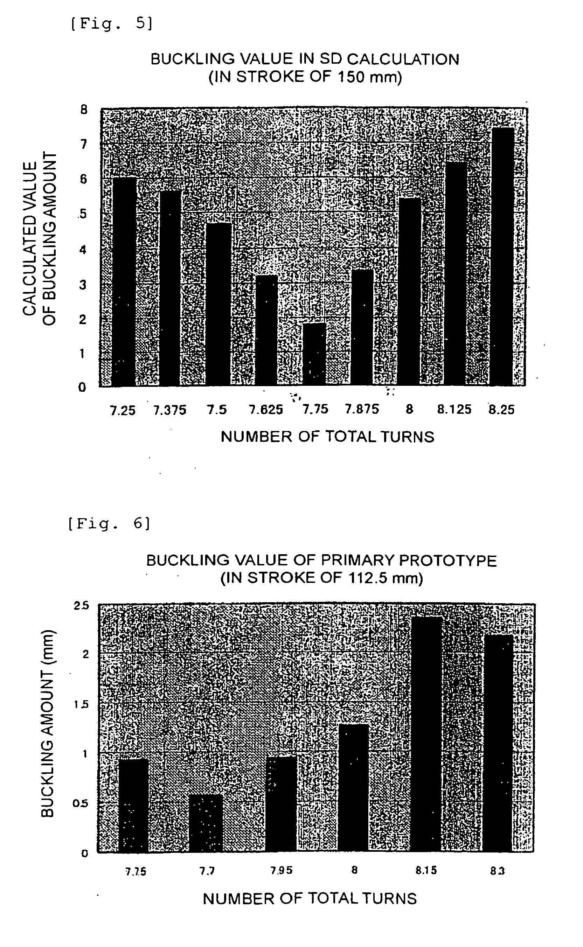

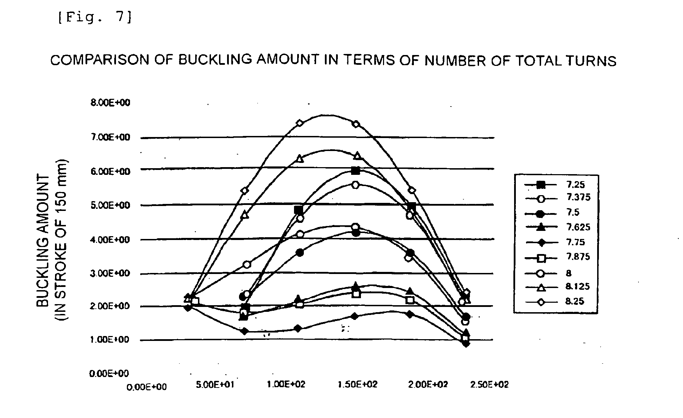

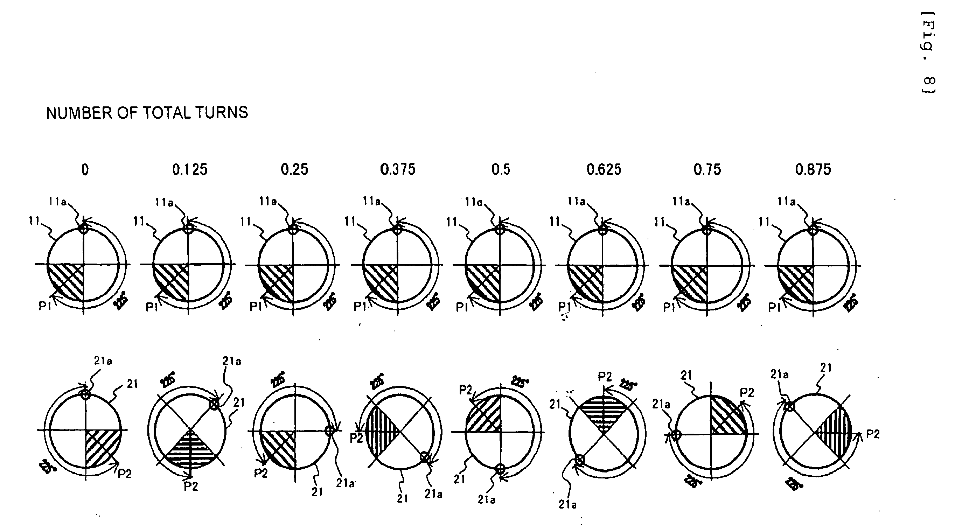

Fig. 4 is a perspective view illustrating buckling of a spring. Fig. 5 is a bar graph illustrating the relationship between a number of total turns of a spring calculated from simulation data and a buckling value. Fig. 6 is a bar graph illustrating the relationship between a number of total turns of a spring of a prototype and a buckling value. Fig. 7 is a curve graph illustrating amounts of buckling at respective points of several kinds of springs, which are different from one another in number of total turns. Fig. 8 shows plan views of both ends of a spring to illustrate the relationship between a number of total turns of a spring and buckling.

In Fig. 4, buckling of the spring 1 generally means trunk bending relative to a center line of the spring 1, which is generated when the spring 1 is contracted (see dotted lines in the figure). The inventors of the present application have taken notice of a number of total turns, wire diameter, and total length and fixation or non-fixation (upper and lower points slip) of both ends, of the spring 1 to simulate the cause for generation of buckling, and found that an influence due to a number of total turns of the spring 1 is considerable and influence due to other factors are less considerable.

Stated in detail, amounts of buckling were simulated with respect to nine kinds of springs 1 in the range of a number of total turns of 7.25 to 8.25 (see Fig. 5), and on the basis of results of simulation, an experiment was made on springs of six kinds of prototypes selected carefully in the range of a number of total turns of 7.75 to 8.3 (see Fig. 6). In addition, in the simulation, a length at the time of contraction (stroke) was set to 150.0 mm. On the other hand, since in the experiment on the prototypes contact between wire portions in the neighborhood of full stroke was generated to settle buckling, a length at the time of contraction was set to 112.5 mm.

As the result of both the simulation and the experiment on the prototypes, it is found that amounts of buckling are influenced by a number of total turns of the springs 1. Also, it has been found that the spring 1 being a suspension spring undergoes less buckling in a case of a number of total turns of 7.75.

Hereupon, amounts of buckling at respective points of a winding were further simulated with respect to nine different kinds of springs 1, which were the same in number of total turns as those in the simulation described above (see Fig. 7). In Fig. 7, an axis of abscissa indicates respective points of a winding from one end of a spring to the other end thereof, and an axis of ordinate indicates amounts of buckling. Accordingly, it may be considered that shapes of curves of respective curve graphs in the figure indicate curved shapes of springs when buckling is generated intact.

As the result of the simulation, it has been clarified that when a number of total turns is 7.625, 7.75 and 7.875, one end side and the other end side of the spring 1 are different from each other in direction of bending at the time of contraction and a large buckling is not generally generated. On the contrary, it has been found that when a number of total turns is other than 7.625, 7.75 and 7.875, one end side and the other end side of the spring 1 overlap each other in direction of bending at the time of contraction and a large buckling is generally generated to bend in one direction.

Hereupon, as the result of earnest examination by the inventors of the present application, it is considered that points P1, P2 of maximum bending at the time of contraction of the spring 1 are present in the neighborhood of those positions on respective first turns 11, 21 on one end side and the other end side of the spring 1, which form about 225° in directions toward second turns (see second turns 12, 22) from terminal ends 11a, 21a.

Hereupon, the points P1, P2 of maximum bending indicate those points on the respective first turns 11, 21, which make maximum displacements when subjected to a compressive load. It is considered that the points P1, P2 of maximum bending make starting points when the spring 1 undergoes buckling. In addition, it is considered that the points P1, P2 of maximum bending are not in agreement with those positions, which form about 225° in directions toward second turns from terminal ends 11 a, 21 a but are present in the neighborhood of about 225°.

Hereupon, the inventors of the present application have found that those regions (see hatched portions in Fig. 8) of the respective first turns 11, 21 on one end side and the other end side of the spring 1, which form about ±45° relative to positions of about 225° in directions toward the second turns from the terminal ends 11a, 21 a, or the points P1, P2 of maximum bending at the time of contraction, present a number of total turns not overlapping one another. With such construction, one end side and the other end side of the spring 1 were made different from each other in direction of bending at the time of contraction and buckling could not be generally generated.

In order to provide for the construction, a number of total turns of the spring 1 is represented by the following formula (1) or (2).

$$N = n + 0.75 \dots (1)$$

$$N = n - 0.25 \dots (2)$$

where N: number of total turns of a spring and n: integral.

As shown in a plan view of Fig. 8 for (0.75), with a spring 1 having a number N of total turns that meets the formula (1) or (2), those regions of the respective first turns 11, 21, which form about ±45° relative to positions of about 225° in directions toward the second turns from the terminal ends 11a, 21a, or the points P1, P2 of maximum bending at the time of contraction, are positioned on opposite sides and do not overlap each other. In this case, directions of bending at the time of contraction are opposite to each other on one end side and the other end side of the spring 1 to enable reducing buckling most.

Also, a number of total turns of the spring 1 may be represented by the following formula (3) or (4).

$$N = (n + 0.75) \pm 0.125 \dots (3)$$

$$N = (n - 0.25) \pm 0.125 \dots (4)$$

where N: number of total turns of a spring and n: integral.

As shown in a plan view of Fig. 8 for (0.625) or (0.875), with a spring 1 having a number N of total turns that meets the formula (3) or (4), those regions of the respective first turns 11, 21, which form about ±45° relative to positions of about 225° in directions toward the second turns from the terminal ends 11a, 21 a, or the points P1, P2 of maximum bending at the time of contraction, do not overlap each other. Also, in this case, directions of bending at the time of contraction are opposite to each other on one end side and the other end side of the spring 1 to enable reducing buckling.

On the contrary, in the case where a number of total turns of the spring 1 may be deduced from the following formulae (5) to (9), it is shown in plan views of Fig. 8 for (0.5), (0.375), (0.25), (0.125) or (0). That is, those regions of the respective first turns 11, 21 of the spring 1, which form about ±45° relative to positions of about 225° in directions toward the second turns from the terminal ends 11a, 21 a, or the points P1, P2 of maximum bending at the time of contraction, overlap each other partially or wholly. As a result, directions of bending at the time of contraction overlap each other on one end side and the other end side of the spring 1, so that a large buckling is generally generated to bend in one direction.

$$N = n + 0.5 \ldots (5)$$

$$N = n + 0.375 \ldots (6)$$

$$N = n + 0.25 \ldots (7)$$

$$N = n + 0.125 \ldots (8)$$

$$N = n \qquad \ldots (9)$$

where N: number of total turns of a spring and n: integral.

With the spring 1 according to the embodiment, a simple construction, in which a number of total turns is adjusted to make directions of bending at the time of contraction different on one end side and the other end side, makes it possible to effectively reduce trunk bending relative to a center line of the spring 1 in one direction, that is, buckling.

Accordingly, when the spring 1 is used for the suspension unit 114 of a vehicle such as motorcycles, it is possible to effectively reduce buckling of the spring 1 in the suspension unit 114 and the vehicle.

As a result, for example, in the case where a spring of small wire diameter made of Fe and mounted in the existing suspension unit 114 is replaced by that spring made of Ti, which is larger in wire diameter than the spring made of Fe, it is also possible to effectively reduce buckling of the Ti spring to prevent contact with the cylinder 115 of the suspension unit 114.

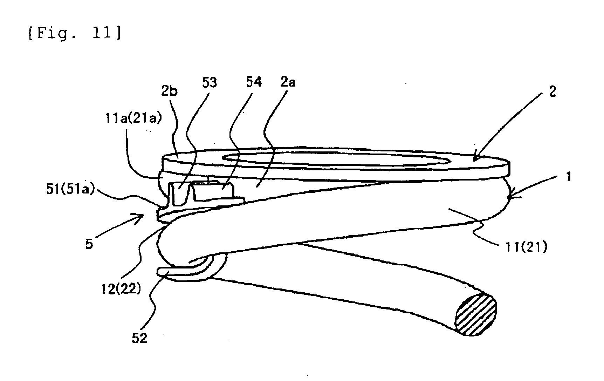

More preferably, the spring 1 (the Ti spring) according to the embodiment may mount thereto a spring spacer shown in Fig. 9 to 11. Fig. 9 is a perspective view showing a spring spacer mounted to the spring according to the embodiment. Fig. 10 is a perspective view showing a state, in which the spring spacer is mounted to the spring according to the embodiment. Fig. 11 is a perspective view showing a state, in which the spring spacer and a spring bearing member are mounted to the spring according to the embodiment.

In Fig. 9, the spring spacer 5 mainly includes an elastic engagement piece (holding portion) 52 formed contiguous to a side of a plate-shaped contact preventive portion 51 to extend downward to bend outward, and latches 53, 54 provided protrusively at a predetermined interval on a tip end side of the contact preventive portion 51.

The thickness L1 of the contact preventive portion 51 is made to generate no inconvenience in assembly, as compared with a clearance L2 between a first turn 11 (21) and a second turn 12 (22) of a spring 1, according to the embodiment, shown in Fig. 10, thus making it possible to insert and arrange the contact preventive portion 51 into the clearance L2. Also, the contact preventive portion 51 is arcuate to have substantially the same radius of curvature as that of the first turn 11 and the second turn 12 of the spring 1. Further, a stepwise recess 51 a is provided on that portion of the contact preventive portion 51, which corresponds to a terminal end 11 a (21 a) of the first turn 11, and the recess 51 a is made smaller in thickness than the remaining portion.

An inner peripheral surface 52a of the elastic engagement piece 52 is arcuate in cross section to correspond to an inner peripheral surface of the second turn 12 of the spring 1, thus enabling elastically holding the inner peripheral surface of the second turn 12. Further, the inner peripheral surface 52a of the elastic engagement piece 52 is a little smaller in radius of curvature than the inner peripheral surface of the second turn 12 of the spring 1, so that even in the case where a dimensional error appears in the diameter of the second turn 12, a sufficient holding force is obtained.

A pair of latches 53, 54 include piece members, which are different in height and thickness from each other, and the latch 53 is made large in height and small in thickness as compared with the latch 54, and susceptible to deformation upon application of a load from above. Also, the latch 53 is made substantially triangular in cross section to have a large thickness on a base side thereof whereby it is made hard to deform upon application of a load from laterally. Such latch 53 abuts against the end 11 a of the first turn 11 of the spring 1 to prevent the spring spacer 5 from moving toward the second turn 12.

Also, the latch 54 is made small in height and large in thickness as compared with the latch 53, and susceptible to deformation upon application of a load from above while deformation is less than that of the latch 53. In the case where the spring bearing members 2 shown in Fig. 11 is mounted on the terminal end 11a of the first turn 11 of the spring 1, a space toward the first turn 11 is narrowed heightwise, so that movement of the spring spacer 5 toward the first turn 11 is prevented by the latch 54.

An explanation is given to a method of mounting the spring spacer 5, which is structured in the manner described above, on the spring 1. As shown in Fig. 10, as the contact preventive portion 51 of the spring spacer 5 is inserted into the clearance L2 between the first turn 11 and the second turn 12 of the spring 1, the elastic engagement piece 52 of the spring spacer 5 is caused to engage with the inner peripheral surface of the second turn 12 of the spring 1, thus temporarily latching the spring spacer 5 thereon.

Thereafter, as shown in Fig. 11, mounting of the spring spacer 5 is completed by mounting the spring bearing members 2 to the first turn 11 of the spring 1. That is, the trunk portion 2a of the spring bearing members 2 is pushed onto an inner periphery of the first turn 11 of the spring 1 to cause the torus-shaped flange portion 2b to abut against a terminal end 11 b of the first turn 11 of the spring 1. Thereby, the trunk portion 2a of the spring bearing members 2 holds down the spring spacer 5 from inside the spring 1, so that coming-out inside the spring 1 is prevented. Also, the elastic engagement piece 52 abuts against the inner peripheral surface of the second turn 12 to prevent coming-out of the spring spacer 5 outside the spring 1.

In the case where the spring spacer 5 is mounted to the spring 1, a simple structure surely prevents contact between the terminal end 11 a of the first turn 11 and the second turn 12 of the spring 1, which is made of Ti or the like and low in surface hardness, to enable achieving an improvement in durability. Accordingly, conjointly with the effect of reducing buckling in the spring 1 according to the embodiment, it is possible to provide the spring 1, the suspension unit 114, and the vehicle, which are further high in reliability.

Also, the thickness L1 of the contact preventive portion 51 is made a thickness, which does not cause inconvenience in terms of assembly as compared with that clearance L2 between the first turn 11 and the second turn 12 of the spring 1, in which the contact preventive portion 51 is mounted. Thereby, the spring spacer 5 can be readily mounted in the clearance L2 between the first turn 11 and the second turn 12 of the spring 1.

Besides, with the spring spacer 5 according to the embodiment, by elastically engaging the elastic engagement piece 52 with the inner peripheral surface of the second turn 12 of the spring 1, it is possible to stably hold the spring spacer 5 in the clearance L2 between the first turn 11 and the second turn 12 of the spring 1. Thereby, mounting of the spring spacer 5 to the spring 1 is made very easy.

In addition, the invention is not limited to the suspension unit comprising the spring, and the vehicle according to the respective embodiments described above. For example, the spring according to the embodiments is not limited to the Ti spring described above but can reduce buckling in various springs other than the Ti spring. Also, the spring according to the technical teaching can be applied widely to units other than ones for suspension.

Further, a spring spacer mounted on the spring according to the technical teaching is not limited to one according to the embodiment but can be applied various spring spacers, among others those which are disclosed in Patent Application No. 2004-364417, based on which the priority of the present patent application is claimed.

In addition, while the vehicle has been described as a motorcycle in the embodiments above, it is not limited thereto. Besides, "vehicle", to which the present suspension unit and spring are applicable, includes motorcycles and automobiles. Stated in detail, "motorcycle" means a motorcycle and includes bicycles with a motor (motorbike) and scooters, "motorcycle" specifically meaning a vehicle capable of turning with a vehicle body inclined. Accordingly, included in "motorcycle" is a vehicle, of which at least one of a front wheel and a rear wheel is made two or more in number and which belongs to tricycles, four-wheel cars (or more) in terms of the number of tires. Further, the present spring spacer is applicable to a so-called saddle-ride type vehicle, such as snowmobile, four-wheel buggy (ATV: All Terrain Vehicle), in addition to "motorcycle".

The description above discloses (amongst others) an embodiment of a spring, of which a number of total turns is adjusted to make directions of bending at the time of contraction different on one end side and the other end side.

With the spring according to said technical teaching, a simple construction, in which a number of total turns is adjusted to make directions of bending at the time of contraction different on one end side and the other end side, makes it possible to effectively reduce trunk bending relative to a center line of the spring in one direction, that is, buckling.

The description further discloses an embodiment of a spring, wherein those regions of respective first turns on one end side and the other end side thereof, which form about ±45° relative to positions of about 225° in directions toward second turns from terminal ends, present a number of total turns not overlapping one another, and directions of bending at the time of contraction are made different on the one end side and the other end side.

According to another aspect of the embodiments thereof, a spring is disclosed, wherein those regions of respective first turns on one end side and the other end side thereof, which form about ±45° relative to points of maximum bending at the time of contraction, present a number of total turns not overlapping one another, and directions of bending at the time of contraction are made different on the one end side and the other end side.

According to a further aspect of the embodiments, a spring is provided, of which a number of total turns is represented by the following formula (1) or (2)

$$N = n + 0.75 \dots (1)$$

$$N = n - 0.25 \dots (2)$$

where N: number of total turns of a spring and n: integral.

According to a further aspect of the embodiments, the description discloses a spring, of which a number of total turns is represented by the following formula (3) or (4)

$$N = (n + 0.75) \pm 0.125 \dots (3)$$

$$N = (n - 0.25) \pm 0.125 \dots (4)$$

where N: number of total turns of a spring and n: integral.

Preferably, any one of the springs structured in the manner described above mounts thereto a spring spacer comprising a contact preventive portion that prevents a terminal end of the first turn from contacting with the second turn.

The description further discloses an embodiment of a suspension unit comprising any one of the springs structured in the manner described above.

Preferably, the spring is made of Ti and a spring bearing member contacting with one end or both ends of the spring is made of Fe.

Also, preferably, the spring is made of Ti, a spring bearing member contacting with one end or both ends of the spring is made of Al, and a spacer made of a resin is interposed between the spring and the spring bearing member.

The description further discloses an embodiment of a vehicle comprising a suspension unit provided with any one of the springs structured in the manner described above.

Accordingly, when the spring is used for a suspension unit of a vehicle, it is possible to effectively reduce buckling of the spring in the suspension unit and the vehicle.

The description above discloses a particularly preferred embodiment in order to provide a spring capable of reducing buckling at the time of contraction while being simple in structure, a suspension unit, and a vehicle.

A spring according to the teaching of the description is a structure such that a number of total turns is adjusted to make directions of bending at the time of contraction different on one end side and the other end side. Preferably, those regions of respective first turns 11, 21 on one end side and the other end side, which form about ±45° relative to positions of about 225° in directions toward second turns from terminal ends 11a, 21a, present a number of total turns not overlapping one another, and directions of bending at the time of contraction are made different on one end side and the other end side. Also, those regions of respective first turns 11, 21 on one end side and the other end side, which form about ±45° relative to points P1, P2 of maximum bending at the time of contraction, present a number of total turns not overlapping one another, and directions of bending at the time of contraction are made different on one end side and the other end side.

**Claims**

1. A suspension unit, comprising a spring (1) having a total number of turns with a first turn (11,21) at each end side of the spring (1), **characterized in that** each first turn (11,21) defines a region of ±45° relative to a position of about 225° measured from a terminal end (11a,21a) of the first turn (11,21) in direction towards a second turn (12,22) of the spring (1), respectively, wherein said regions at both end sides of the spring (1) are free of overlapping with regard to each other, so as in a contracted state of the spring (1) a bending direction of one end side of the spring (1) is different to a bending direction of the other end side of the spring (1).

2. A suspension unit according to claim 1 **characterized in that**, said regions of respective first turns (11,21) at both end sides of the spring (1) are formed about $\pm 45°$ relative to points of maximum bending in the contracted state.

3. A suspension unit according to claim 1 or 2, **characterized in that** the number of total turns of the spring (1) is represented by the following formula (1) or (2)

$$N = n + 0.75 ... (1)$$

$$N = n - 0.25 ... (2)$$

where N: number of total turns of a spring and n: integral.

4. A suspension unit according to at least one of the claims 1 to 3, **characterized in that** the number of total turns of the spring (1) is represented by the following formula (3) or (4)

$$N = (n + 0.75) \pm 0.125 ... (3)$$

$$N = (n - 0.25) \pm 0.125 ... (4)$$

where N: number of total turns of a spring and n: integral.

5. A suspension unit according to at least one of the claims 1 to 4, **characterized in that** a spring spacer (5) is mounted to the spring (1), the spring spacer (5) comprising a contact preventive portion (51) configured to prevent the terminal end (11 a,21 a) of the first turn (11,21) from contacting with the second turn (12,22).

6. A suspension unit according to at least one of the claims 1 to 5, **characterized in that** the spring (1) is made of a material having a lower material strength than Fe, preferably made of Ti.

7. A suspension unit according to at least one of the claims 1 to 6, **characterized in that** at least one spring bearing member (2,3) contacts with one end or both ends of the spring (1), the spring bearing member (2,3) being made of Fe and/or Al.

8. A suspension unit according to claim 7, **characterized in that** a spacer (4) made of a resin is interposed between the spring (1) and the spring bearing member (3).

9. A vehicle, in particular a motorcycle, comprising a suspension unit according to at least one of the claims 1 to 8.

**Patentansprüche**

1. Aufhängungseinheit, aufweisend eine Feder (1) mit einer gesamten Anzahl von Windungen mit einer ersten Windung (11, 21) an jeder Endseite der Feder (1), **dadurch gekennzeichnet, dass** jede erste Windung (11, 21) einen Bereich von $\pm$ 45° relativ zu einer Position von ungefähr 225° bildet, jeweils gemessen von einem Anschlussende (11a, 21a) der ersten Windung (11, 21) in eine Richtung zu einer zweiten Windung (12, 22) der Feder (1), wobei die Bereiche an beiden Endseiten der Feder (1) frei vom Überlappen in Bezug zueinander sind, so dass in einem kontrahierten Zustand der Feder (1) eine Biegerichtung einer Endseite der Feder (1) von einer Biegerichtung der anderen Endseite der Feder (1) verschieden ist.

2. Aufhängungseinheit nach Anspruch 1, **dadurch gekennzeichnet, dass** die Bereiche der jeweiligen ersten Windungen (11, 21) an beiden Endseiten der Feder (1) ungefähr $\pm$ 45° relativ zu Punkten der maximalen Biegung in dem kontrahierten Zustand gebildet sind.

3. Aufhängungseinheit nach Anspruch 1 oder 2, **dadurch gekennzeichnet, dass** die Anzahl der gesamten Windungen der Feder (1) durch die folgende Formel (1) oder (2) repräsentiert wird

$$N = n + 0{,}75 \qquad \ldots (1)$$

$$N = n - 0{,}25 \qquad \ldots (2)$$

wo N: Anzahl der gesamten Windungen einer Feder und n: ganzzahlig ist.

4. Aufhängungseinheit nach Anspruch 1 oder 3, **dadurch gekennzeichnet, dass** die Anzahl der gesamten Windungen der Feder (1) durch die folgende Formel (3) oder (4) repräsentiert wird

$$N = (n + 0{,}75) \pm 0{,}125 \qquad \ldots (3)$$

$$N = (n - 0{,}25) \pm 0{,}125 \qquad \ldots (4)$$

wo N: Anzahl der gesamten Windungen einer Feder und n: ganzzahlig ist.

5. Aufhängungseinheit nach zumindest einem der Ansprüche 1 bis 4, **dadurch gekennzeichnet, dass** ein Federabstandshalter (5) an der Feder (1) montiert ist, wobei der Federabstandshalter (5) aufweist einen Kontaktverhinderungsabschnitt (51), konfiguriert, um zu verhindern, dass das Anschlussende (11a, 21a) der ersten Windung (11, 21) mit der zweiten Windung (12, 22) in Kontakt kommt.

6. Aufhängungseinheit nach zumindest einem der Ansprüche 1 bis 5, **dadurch gekennzeichnet, dass** die Feder (1) aus einem Material besteht, das eine niedrigere Materialfestigkeit als Fe hat, vorzugsweise aus Ti hergestellt ist.

7. Aufhängungseinheit nach zumindest einem der Ansprüche 1 bis 6, **dadurch gekennzeichnet, dass** zumindest ein Federlagerteil (2, 3) mit einem Ende oder beiden Enden der Feder (1) in Kontakt ist, wobei das Federlagerteil (2, 3) aus Fe und / oder Al besteht.

8. Aufhängungseinheit nach Anspruch 7, **dadurch gekennzeichnet, dass** ein Abstandshalter (4), hergestellt aus einem Kunststoff, zwischen die Feder (1) und das Federlagerteil (3) eingesetzt ist.

9. Fahrzeug, insbesondere Motorrad, mit einer Aufhängungseinheit nach zumindest einem der Ansprüche 1 bis 8.


**Revendications**

1. Unité de suspension comprenant un ressort (1) ayant un nombre total de spires et doté d'une première spire (11, 21) à chaque côté d'extrémité du ressort (1), **caractérisée en ce que** chaque première spire (11, 21) définit une région de $\pm 45°$ par rapport à une position d'environ 225° mesurée à partir d'une extrémité (11a, 21a) terminale de la première spire (11, 21) en direction d'une deuxième spire (12, 22) du ressort (1), respectivement, dans laquelle lesdites régions des deux côtés d'extrémité du ressort (1) sont exemptes de chevauchement l'une par rapport à l'autre, de sorte que dans un état contracté du ressort (1), une direction de flexion d'un côté d'extrémité du ressort (1) est différente d'une direction de flexion de l'autre côté d'extrémité du ressort (1).

2. Unité de suspension selon la revendication 1, **caractérisée en ce que** lesdites régions de premières spires (11, 21) respectives aux deux côtés d'extrémité du ressort (1) sont formées à environ $\pm 45°$ par rapport à des points de flexion maximum à l'état contracté.

3. Unité de suspension selon la revendication 1 ou 2, **caractérisée en ce que** le nombre de spires totales du ressort (1) est représenté par la formule (1) ou (2) suivante:

$$N = n + 0,75 \quad ... \quad (1)$$

$$N = n - 0,25 \quad ... \quad (2)$$

N étant le nombre de spires totales d'un ressort et n un entier.

**4.** Unité de suspension selon l'une au moins des revendications 1 à 3, **caractérisée en ce que** le nombre de spires totales du ressort (1) est représenté par la formule (3) ou (4) suivante:

$$N = (n + 0,75) \pm 0,125 \quad ... \quad (3)$$

$$N = (n - 0,25) \pm 0,125 \quad ... \quad (4)$$

N étant le nombre de spires totales d'un ressort et n un entier.

**5.** Unité de suspension selon l'une au moins des revendications 1 à 4, **caractérisée en ce qu'**une entretoise (5) de ressort est montée sur le ressort (1), l'entretoise (5) de ressort comprenant une partie (51) de prévention de contact configurée pour empêcher l'extrémité (11a, 21a) terminale de la première spire (11, 21) d'entrer en contact avec la deuxième spire (12, 22).

**6.** Unité de suspension selon l'une au moins des revendications 1 à 5, **caractérisée en ce que** le ressort (1) est constitué d'un matériau possédant une résistance de matériau inférieure à celle de Fe et est constitué de préférence de Ti.

**7.** Unité de suspension selon l'une au moins des revendications 1 à 6, **caractérisée en ce qu'**au moins un élément (2, 3) de support du ressort est au contact d'une extrémité ou des deux extrémités du ressort (1), l'élément (2, 3) de support du ressort étant constitué de Fe et/ou d'Al.

**8.** Unité de suspension selon la revendication 7, **caractérisée en ce qu'**une entretoise (4) constituée de résine est intercalée entre le ressort (1) et l'élément (3) de support du ressort.

**9.** Véhicule, en particulier une motocyclette, comprenant une unité de suspension selon l'une au moins des revendications 1 à 8.

[Fig. 1]

[Fig. 2]

[Fig. 3]

[Fig. 4]

[Fig. 5]

**BUCKLING VALUE IN SD CALCULATION**
**(IN STROKE OF 150 mm)**

[Fig. 6]

**BUCKLING VALUE OF PRIMARY PROTOTYPE**
**(IN STROKE OF 112.5 mm)**

16

[Fig. 7]

COMPARISON OF BUCKLING AMOUNT IN TERMS OF NUMBER OF TOTAL TURNS

[Fig. 8]

NUMBER OF TOTAL TURNS

[Fig. 9]

[Fig. 10]

[Fig. 11]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020105127 A1
- WO 2004364417 A